# EUROPEAN PATENT APPLICATION

(11) **EP 1 160 691 A2**
(43) Date of publication of application: **05.12.2001**
(21) Application number: 01304275.9
(22) Date of filing: 14.05.2001
(51) Int. Cl.: G06F 17/30

(54) **Distribution system for structured information**

(30) Priority: 15.05.2000 US 204237 P
(71) Applicant: Xiam, Limited, Dublin 2 (IE)
(72) Inventor: Parker, Simon, Shankill, Dublin 18 (IE); MacCarthy, Diarmuid Micheal, Raheen, Limerick (IE); McDaid, Georgina, Wicklow Tow, Co. Wicklow (IE); Watson, Charles Ian, Monkstown, Co. Dublin (IE); Baker, Robert Patrick, Dublin 3 (IE); O'Donoghue, Hugh, Killiney, Co. Dublin (IE); Buckley, Patrick Anthony Warren, Listowel, Co. Kerry (IE)
(74) Representative: Beresford, Keith Denis Lewis

(57) **Abstract**

An information routing system for distributing structured information between a provider and one or more consumers is disclosed in accordance with an embodiment of the present invention. The system includes an information router for coupling the provider to the one or more consumers comprising a subscriber, a person or an organization coupled to the information router for conveying the one or more consumer's interest in a particular service.

The particular service includes a particular content as defined by the subscriber. The system further includes service request means for requesting the particular service dictated by the subscriber to the information router, and service response means responsive to a document received by the information router from the provider, the received document being parsed to include only the particular content, wherein requests for information by subscribers are sent to an information router which parses a document received from the provider and returns service information from which relevant portions are then sent in the form of service responses to the consumers.

## Description

The present invention relates generally to information distribution methods, and particularly to methods for transferring information between computers or devices using data processing.

It is frequently necessary to transport data from one computer to another. One common method used for transporting data employs a portable storage medium, such as a diskette, which is placed into an output device, such as a disk drive, in the computer which contains data to be transported to another computer. The disk drive writes the data to the diskette, and the diskette is physically transported to the computer which is to receive the data. The data is then read from the diskette using an input device, such as a disk drive. Although this method is effective, it is inefficient since it requires physically moving diskettes from the sending computer to the receiving computer. In addition, the relatively limited data storage capacity in portable storage media restricts the amount of data which can be transported at once, requiring more memory media or more frequent trips between computers to transport data. In addition, transfer of data is dependent on distance disk needs to be transported. The further the distance, the more time required to perform the transfer. Also, each disk cannot be used simultaneously by multiple users, where only one user can handle the disk at a time.

Alternatively, data is transferred from one computer to another by connecting the computers with a transmission medium, such as a cable. The sending computer uses a data communication device to write data to the transmission medium, and the receiving computer uses a similar device to read data from the transmission medium. Communication between the computers is bidirectional, however, for efficient communication to take place, transmissions must follow particular conventions, known as protocols. For example, a protocol might require that one computer not send data to the transmission medium unless the other computer is ready to receive the data being sent. Communication between two computers through transmission media is very useful, however, this limits communication to be possible only between the two computers which are connected to the transmission media.

It is also possible for three or more computers to share the same transmission medium for a more versatile means of communication. In this case, when one computer sends data, all the other computers can receive it. This is referred to as broadcasting. When a group of computers are connected in this manner, a broadcast network is formed.

A broadcast network requires a complex protocol in which each computer connected to the transmission medium is required to be assigned a unique address. When one computer sends data to another computer it includes its own address arid the receiving computer's address. Each computer passively receives the transmission, except, only the receiving computer, which actively receives it. If the number of computers connected to the transmission medium is limited, data intended for more than one computer is not duplicated, and there is less duplication of data. However, a broadcast network doesn't scale well, since much of the traffic each computer sees is irrelevant. When two broadcast networks are connected to each other, one way to keep information traffic localized is to include one computer in each network to handle external communications. A computer which performs this role on behalf of a network is referred to as a router. For example, each of two broadcast networks, network A and network B, has its own router which is connected to one another. A sending computer on network A broadcasts data which is intended for a receiving computer on network B. The router on network A hears the transmission, and recognizes that the data is destined for a receiving computer on network B, and sends the data to the router on network B. The router on network B broadcasts the data on network B, and the receiving computer hears it and receives the data. The two broadcast networks and the link between them form a routed network, referred to as an internet. This internet may be connected to other internets to form a larger network. Larger networks can be connected to other larger internets to form an even larger internet. The Internet is an example of a large public internet.

Routed networks require more complicated data transport protocols and addresses than broadcast networks. The most widely adopted protocol and addressing scheme used by routed networks is the Internet Protocol (IP), which also provides a foundation for a family of protocols used for specialized communications. Some examples of transport protocols include Domain Name Service (DNS), which identifies computers by name as well as by address; Transmission Control Protocol (TCP), which guarantees a reliable channel between two applications on different computers; Simple Mail Transport Protocol (SMTP), which uses TCP to move electronic mail from one computer to another; Hypertext Transport Protocol (HTTP), also based on TCP, and forms the basis of the World Wide Web; File Transfer Protocol (FTP), which uses two or more TCP connections to move files between computers. Any of these transport protocols may be used to move documents between computers on a network.

Currently, it is not complicated to transport data from one computer to another, anywhere in the world at any time, if the sending and receiving computers are connected to the Internet and their names or addresses are specified. The process by which data is transferred between computers is no longer a significant problem, however, determining what data to send, how to represent the data, and where to send the data remains a challenge.

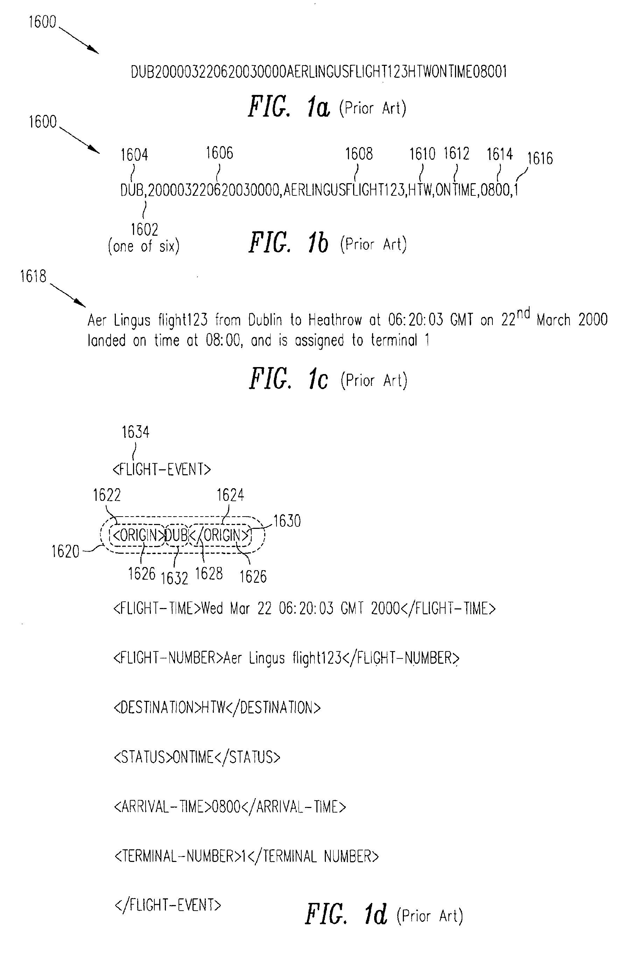

Computer systems are proficient at performing functions on data, however they are not as capable as people are at interpreting data to determine what information is represented by the data. For example, Fig. 1 shows a set of data 1600 represented by a sequence of characters. A person may deduce what information is represented by the characters through guesswork. Complex computer systems have been designed to do the same, although without the same level of sophistication as in the human mind. Generally, computers and humans require some clues regarding the structure and context of the data in order to interpret its meaning. Fig. 1(b) shows the data 1600 structured as a sequence of elements 1604, 1606, 1608, 1610, 1612, 1614, 1616 separated by commas 1602. Structuring the data in this manner provides some indication as to what the data represents. For example, the last element 1616 is the number 1, the second element 1606 might be a date, and in the third element 1608, '123' belongs with 'Aer lingus flight'. If it is known that this data should be interpreted as "Airline flight status", the information may be interpreted as flight information. The first element 1604 represents the flight origin of Dublin, the second element 1606 represents the flight time of March 22, 2000, 06:20:03 GMT, the third element 1608 represents the flight number of Aer lingus flight123, the fourth element 1610 represents the destination of Heathrow Airport, the fifth element 1612 represents the flight status being on time, the sixth element 1614 represents the arrival time of 8:00, and the last element 1616 represents the terminal number of 1. A free text representation 1618 of this information is shown in Fig. 1(c), which can easily be interpreted by humans who have some understanding of air travel information and the English language. However, interpretation of data in free text format by computers would be very complicated to achieve since the structure of the data can be inconsistent with the limited types of formats that the computer can decipher.

Markup languages offer a powerful compromise between the information content of free text and the fixed structures that computer systems require to decipher such data. The data 1600 expressed using Extensible Markup Language (XML) is shown in Fig. 1(d) to include elements 1620 introduced by a start tag 1622 containing a name 1626, followed by an end tag 1624 containing the name 1626 prefixed by a forward slash 1628. Tags 1622, 1624 are delimited by angle brackets 1630. Elements 1620 may contain text/other elements 1632. Element "FLIGHT-EVENT" 1634 includes seven other elements 1620, and element 1620 "ORIGIN" includes text 1632 "DUB". Element 1620 "FLIGHT-TIME" includes text 1632 "Wed Mar 22 06:20:03 GMT 2000", element 1620 "FLIGHT-NUMBER" includes text 1632 "Aer Lingus flight123", element 1620 "DESTINATION" includes text 1632 "HTW", element 1620 "STATUS" includes text 1632 "ONTIME", element 1620 "ARRIVAL-TIME" includes text 1632 "0800", element 1620 "TERMINAL-NUMBER" includes text 1632 "1". A system which is familiar with "FLIGHT-EVENT" elements 1620 can read any of the elements 1620 directly, without being required to read them in the order that they appear. This is an example of structured information which is typically stored in the form of a document for manipulation and transport. There is no theoretical limit to the size of the document, where a very large document may be treated as a continuous stream of information. XML is a very useful means for representation of information between organizations or people. Increasingly more sources publish information on the Internet using XML and similar formats. As more information becomes available in XML format, a method for selecting relevant portions of data and discarding non-relevant data will become more important. Query and manipulation languages for structured information are growing to become more sophisticated, however, in conventional configurations, entire documents must be transported across the network before a query for relevant information within a document can be executed locally. Public information is typically made available on web sites, allowing interested parties to download documents at will. Alternatively, when distribution of documents is initiated by a provider, documents can be sent to one or more consumers as e-mail messages. In addition, other distribution methods are available within proprietary frameworks. In this context 'Pull' implies that the consumer initiates each transfer and 'Push' implies that the provider initiates each transfer. A 'Publish and Subscribe' distribution system is another method of information distribution in which the provider maintains a list of interested consumers and sends documents to all consumers on the list from time to time.

If a single document is distributed to consumers which are dispersed across several networks, network resources can be conserved by sending a single copy to each network which has consumers. The document is then broadcast on the network in such a way that only the interested consumers hear it. This compromise between direct transfer and broadcast is known as 'Multicast'.

Many organizations find it convenient to consolidate all their external network communications at a single point, for better management, security or economy. Such a point of contact is sometimes known as a 'gateway'. A typical example is the corporate mail server.

There is a need for gateways to manage the controlled exchange of structured information between organizations, providing each organization a means to protect a single gateway computer rather than many computers, and to consolidate requests for documents from external computers or networks so that documents received in response can be distributed internally. This is more economical, particularly when requested documents require payment. In addition, it is possible to enforce a limit to internal users regarding the quantity of requests which are allowed for documents which require payment, thereby limiting spending and duplication of spending. Thus, the need arises for a system and method for a general-purpose open distribution mechanism for structured information, which can conserve network resources by selecting the relevant parts of a document near the source and combining similar requests from groups of consumers, so as to provide better information management, security, economy.

An information routing system for distributing structured information between a provider and one or more consumers is disclosed in accordance with an embodiment of the present invention. The system includes an information router for coupling the provider to the one or more consumers comprising a subscriber, a person or an organization coupled to the information router for conveying the one or more consumer's interest in a particular service.

The particular service includes a particular content as defined by the subscriber. The system further includes service request means for requesting the particular service dictated by the subscriber to the information router, and service response means responsive to a document received by the information router from the provider, the received document being parsed to include only the particular content, wherein requests for information by subscribers are sent to an information router which parses a document received from the provider and returns service information from which relevant portions are then sent in the form of service responses to the consumers.

The foregoing and other objects, features and advantages of the present invention will be apparent from the following detailed description of the preferred embodiments which make reference to several figures of the drawing.

Embodiments of the present invention will now be described by way of example only and with reference to the accompanying drawings of which:
Fig. 1(a) shows a prior art set of data 1600 represented by a sequence of characters.
Fig. 1(b) shows a prior art set of data 1600 with elements 1604, 1606, 1608, 1610, 1612, 1614, 1616, separated by commas 1602.
Fig. 1(c) shows a prior art free text representation 1618 of the data 1600 shown in Fig. 1(a).
Fig. 1(d) shows a prior art Extensible Markup Language (XML) representation of the data 1600 shown in Fig. 1(a).
Fig. 2 shows a block diagram of an information routing system 9, in accordance with an embodiment of the present invention.
Fig. 3 shows a provider 10, in accordance with an embodiment of the present invention.
Fig. 4 shows an information router 20 or 36, in accordance with an embodiment of the present invention.
Fig. 5 shows one example of a service publication unit 100, in accordance with an embodiment of the present invention.
Fig. 6 shows a flowchart of functions performed as entry gateway 106 of service publication unit 100 in Fig. 5 processes a service definition 104.
Fig. 7 shows one example of a request flow unit 120, in accordance with an embodiment of the present invention.
Fig. 8 shows a flowchart of how exit gateway 130 shown in Fig. 7 processes a service request 126, 128, in accordance with an embodiment of the present invention.
Fig. 9 shows a flowchart of how intermediary 134, in Fig. 7, processes a forwarded service request 132, according to an embodiment of the present invention.
Fig. 10 shows a flowchart representing the summarization process of an information router 130, 134, 136 in Fig. 7 for a single service 156, in accordance with an embodiment of the present invention.
Fig. 11shows a flowchart representing the process by which an exit gateway 130 or an intermediary134 would forward a service request summary152, 162 to an entry gateway 136, in accordance with an embodiment of the present invention.
Fig. 12 shows an example of an information flow unit 168 depicting how service information 170 flows between a provider 172 to a consumer 174, according to an embodiment of the present invention.
Fig. 13 shows a flowchart of the process by which an information router 178, 182, 186 in Fig. 12 processes incoming service information 170 or forwarded service responses 180, 184, according to an embodiment of the present invention.
Fig. 14(a) shows a block diagram of an example of a flight status information routing system 1500, in accordance with an embodiment of the present invention, to illustrate the summarization process.
Fig. 14(b) shows an information router segment 1530, from information routing system 1500 shown in Fig. 14(a), in accordance with an embodiment of the present invention.
Fig. 14(c) shows an information routing segment 1532 of information routing system 1500 shown in Fig. 14(a), according to an embodiment of the present invention.
Fig. 14(d) shows an information routing segment 1534 from information routing system 1500 shown in Fig. 14(a), according to an embodiment of the present invention.
Fig. 14(e) shows an information routing segment 1536 of information routing system 1500 shown in Fig. 14(a), according to an embodiment of the present invention.
Fig. 14(f) shows an information routing segment 1538 of information routing system 1500 shown in Fig. 14(a), according to an embodiment of the present invention.

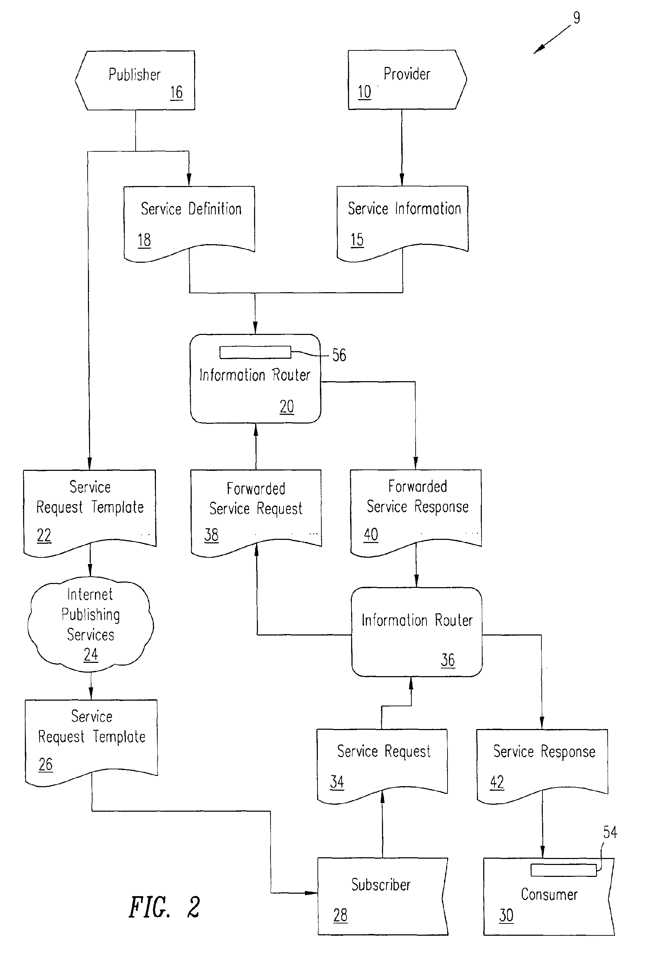

Referring now to Fig. 2, an embodiment of the present invention is shown to include an information routing system 9 comprising of a publisher 16, a provider 10, an internet publishing service 24, two information routers 20, 36, a subscriber 28, and a consumer 30. Also shown in Fig. 2 are types of structured information which are exchanged within the information routing system 9 in the form of documents, including service definition 18, service request templates 22, 26, service request 34, forwarded service request 38, service response 42, forwarded service response 40, and service information 15.

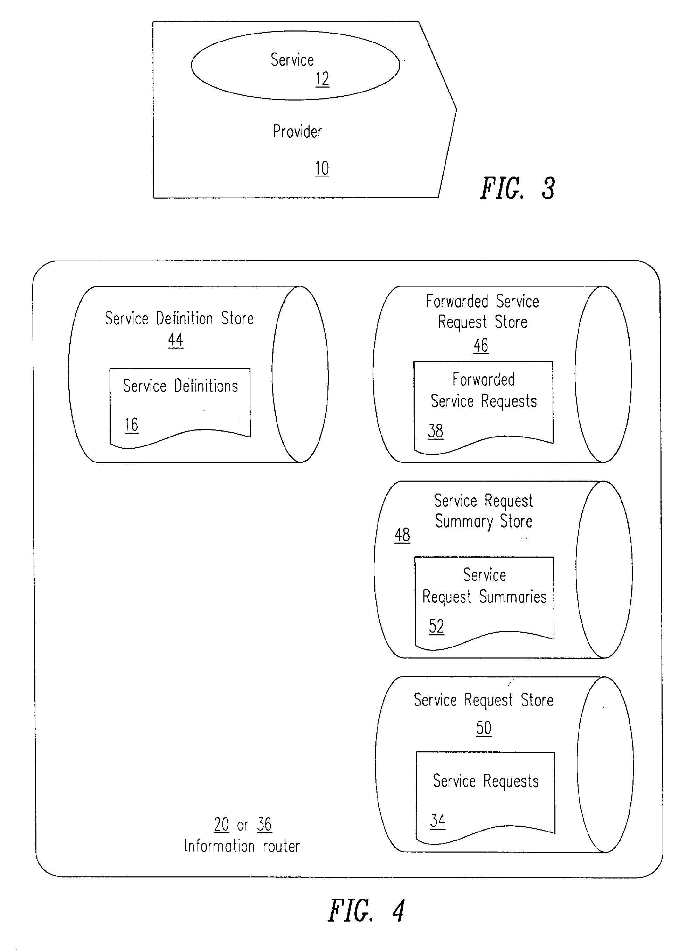

In Fig. 3, a provider is shown, in accordance with an embodiment of the present invention, to include a service 12.
Shown in Fig. 4 is an information router 20 or 36 to include a service definition store 44 for storage of service definitions 18, a forwarded service request store 46 for storage of forwarded service requests 38, a service request summary store 48 for storage of service request summaries 52, and a service request store 50 for storage of service requests 34, in accordance with an embodiment of the present invention.

Referring now to information routing system 9 shown in Fig. 2 again, provider 10 processes data and can create or manipulate structured information. The supply of one type of information by one provider 10 is known as a service 12. Publisher 16 is aware of service information 15 about service 12 provided by provider 10. Publisher 16 is a person or organization which describes and advertises services 12, not necessarily owning nor controlling provider 10 of service 12. It is also possible for publisher 16 and provider 10 to be the same person or organization. Publisher 16 produces service definition 18 involved with service information 15, and then provides service definition 18 for information router 20 which is then stored in service definition store 44 shown in Fig. 4. The service definition 18 describes the structure of the service information 15 and the location where it is made available, and may also include other aspects of the service 12, such as the frequency of supply, charges or restrictions on use of the service information 15, or sensitive information about the provider 10. The service definition 18 further includes one or more service request templates 22 which describes how to request subsets of the service information 15. The publisher 16 also makes available service request templates 22, 26 through internet publishing services 24 for subscriber 28. Provider 10 provides information router 20 with service information 15 according to requirements of service definition 18.

Consumer 30 is a data processor which receives and uses all or some of service information 15 offered by provider 10, whereas subscriber 28 is a person or organization which expresses consumer's 30 interest in a service 12. Subscriber 28 does not necessarily own or control consumer 30. Subscriber 28 creates a service request 34 by combining a service request template 26 with information from the consumer 30, minimally including specification of service 12 being requested, address 56 of information router 20 with available service 12, consumer's address 54 where information is to be sent, and a result specification comprising of information such as selection criteria to identify which parts of service information 15 are interesting and which parts should be returned, formatting instructions to define the presentation of the service response 42, transformation instructions to change the response 42 into a different form, scripts written in a standard language such as XSL or XQL, parameters to control specialized features of custom information routers, or any other processing information which information routing system 9 is capable of comprehending. Service request 34 is transmitted to information router 36, where it is stored in service request store 50. Information router 36 produces service request summary 52 comprising of information extracted from one or more service requests 34 received by information router 36, which is then stored in service request summary store 48. The service request summary 52 is then transmitted to information router 20 in the form of forwarded service request 38. Information router 36 is known as the forwarding information router, since it is the sender of service request summary 52. Service provider 10 determines when service information 15 is sent, and is not controlled by information routers 20, 36. When service information 15 is sent from service provider 10 to information router 20, the received service information 15 is formatted according to a service definition. Service information 15 is parsed in information router 20 to include elements requested by forwarded service request 38, creating a forwarded service response 40 which is transported to information router 36.

In Fig. 2, service response 42 is developed by information router 36 by referring to service request 34 to determine details of information to return in reply. Service response 42 is then transmitted to consumer 30. The contents, structure and format of the information 15 provided in service response 42 depend on parameters included in the service request 34. For example, formatting instructions determine how data is presented in service response 42.

An information router which receives service information from one or more providers is also known as an entry gateway, while an information router which receives a service request from a subscriber and sends the corresponding service response to a consumer is also known as an exit gateway. In Fig. 2, information router 20, which receives service information 15 from provider 10, is an entry gateway. Also, since information router 36 receives service request 34 from subscriber 28 and sends corresponding service response 42 to consumer 30, it is an exit gateway. Each entry gateway 20 represents a particular service 12 which can be provided by one or more providers 10.

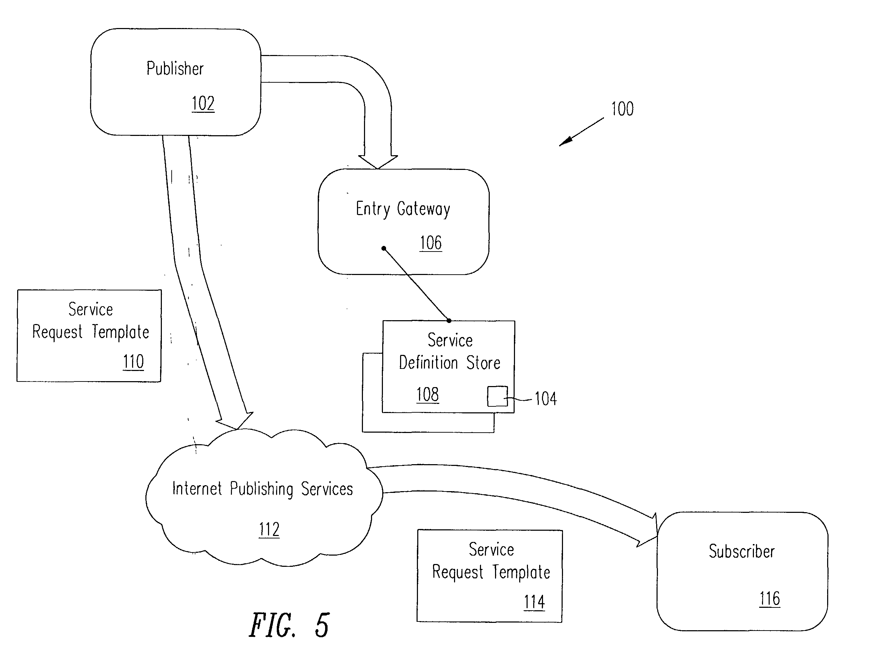

In Fig. 5, one example of a service publication unit 100 is shown in accordance with an embodiment of the present invention. The service publication unit 100 is shown to include a publisher 102, a service definition 104, an entry gateway 106, a service definition store 108, service request templates 110, 114, internet publishing services 112, and a subscriber 116. The publisher 102 prepares a service definition 104 and sends it to entry gateway 106 which saves it in its service definition store 108. The publisher 102 makes service request templates 110 available to subscriber 116 using any appropriate publishing mechanism such as internet publishing services 112.

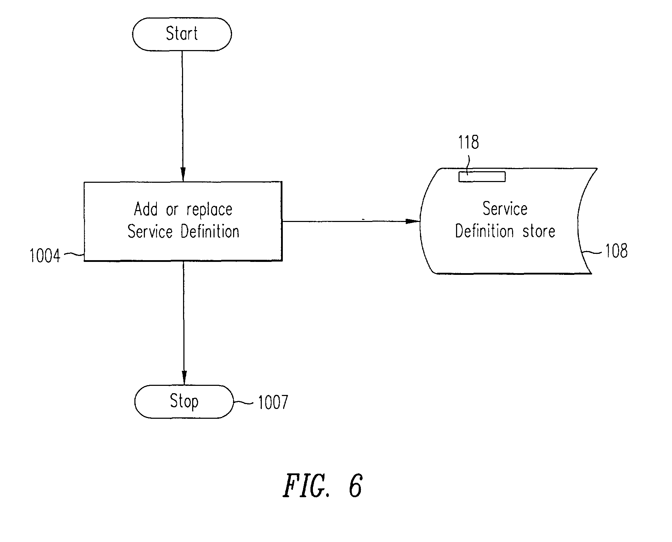

Fig. 6 shows a flowchart of functions performed as entry gateway 106 of service publication unit 100 in Fig. 5 processes a service definition 104. At 1004, the entry gateway 106 saves the service definition 104 in store 108, replacing the existing definition 118 if one exists. The process then comes to a stop at 1007.

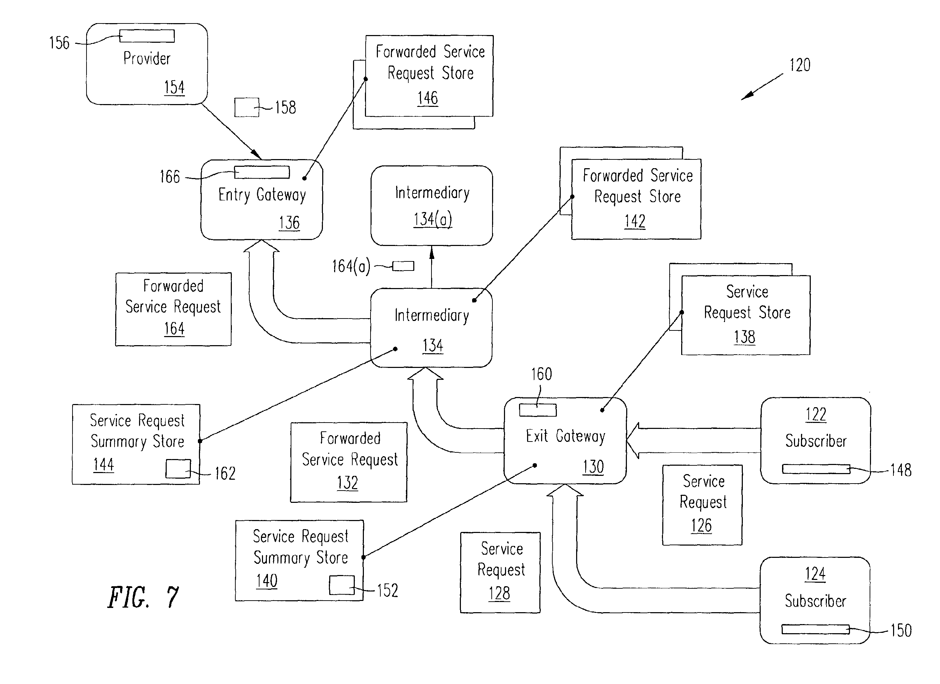

Referring now to Fig. 7, one example of a request flow unit 120 is shown in accordance with an embodiment of the present invention. The request flow unit 120 is shown to include a provider 154 providing a service 156 and service information 158 to an entry gateway 136, subscribers 122 and 124 which send service requests 126 and 128, respectively, to exit gateway 130, which sends forwarded service request 164 to an intermediary 134. Information routers coupled between an entry gateway 136 and an exit gateway 130 are also known as intermediaries 134. Forwarded service request 132 is sent from intermediary 134 to entry gateway 136. Exit gateway 130 includes a service request store 138 and a service request summary store 140. The intermediary 134 includes a forwarded service request store 142 and a service request summary store 144, and the entry gateway 136 includes a forwarded service request store 146. Subscriber 122 customizes a service request template 148 to create service request 126 and submits it to exit gateway 130 using any transport protocol, such as SMTP, HTTP or FTP, supported by both the subscriber 122 and the exit gateway 130. Similarly, subscriber 124 customizes a service request template 150 to create service request 128 and submits it to exit gateway 130 using any transport protocol supported by both the subscriber 124 and the exit gateway 130. For each service request 126, 128, exit gateway 130 maintains a store of outstanding service requests 138 and a summary of service requests 152.

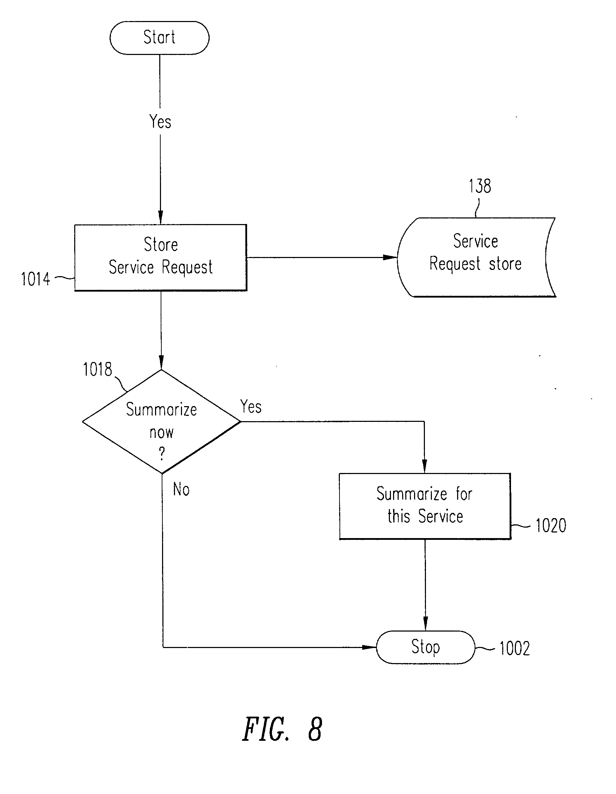

In Fig. 8, a flowchart of how exit gateway 130 shown in Fig. 7 processes a service request 126, 128 is shown, in accordance with an embodiment of the present invention. Exit gateway 130 stores service request 126 or 128 in service request store 138, at 1014 and then determines at 1018 if it should summarize service requests 126, 128 for the service 156 provided by provider 154. If service requests 126, 128 are not to be summarized, the process is stopped at 1022. If summarization is to occur, it is invoked at 1020. A service request summary 152 consolidates service requests by describing the subset of service information 158 which is required to fulfill all the service requests126, 128 which have been saved in service request store 138 associated with exit gateway 130. The summary 152 represents a logical and functional union of the results requested by the current and previous service requests 126, 128. It is possible to generate a fresh summary 152 when a new service request 126, 128 arrives at exit gateway 130, or alternatively, a fresh summary 152 is generated at less frequent intervals after numerous service requests 126, 128 have arrived simultaneously at exit gateway 130 to increase efficiency of the process. The process of summarization is further described in a detailed example hereinbelow.

Referring again to Fig. 7, if service requests 126 and 128 are associated with the same service 156, exit gateway 130 summarizes them, producing forwarded service request 132, which is sent to intermediary 134. Forwarded service request 132 minimally includes the sending information router's address 160, and a service request summary 152. For each service156, intermediary 134, in Fig. 7, maintains outstanding forwarded service requests 132 in store 142 and a summary of forwarded service requests 162 in store 144. Only the most recent forwarded service requests 132 for each service 156 from forwarding information router 130 is saved in store 142.

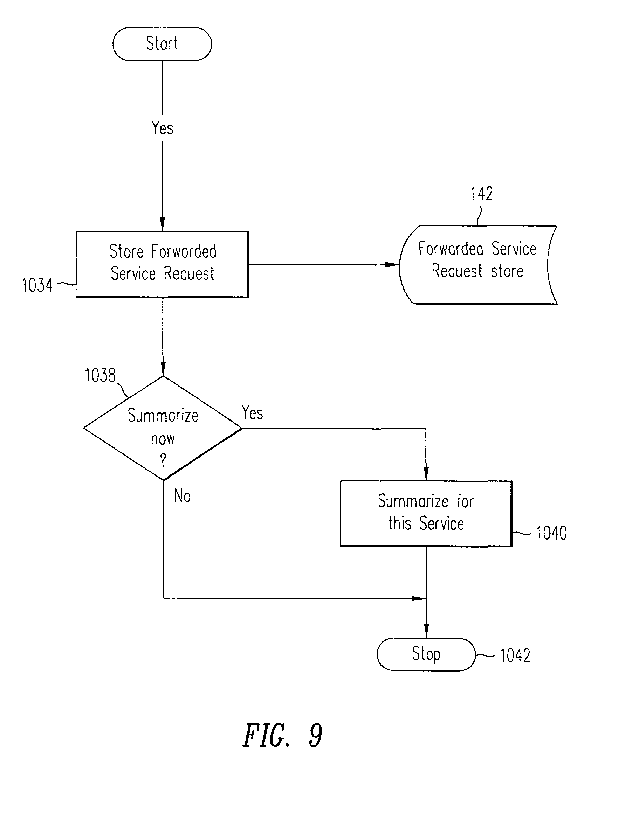

In Fig. 9, a flowchart of how intermediary 134, in Fig. 7, processes a forwarded service request 132 is shown, according to an embodiment of the present invention. Intermediary 134 saves forwarded service request 132 in forwarded service request store 142, at 1034. Intermediary 134 then determines at 1038 whether it should summarize forwarded service requests 132. If so, the summarization process is invoked at 1040. If summarization is not necessary, the process is stopped at 1042. The procedure an intermediary 134 uses to summarize forwarded service requests 132 is similar to the procedure exit gateway 130 uses to summarize service requests 126, 128, which is described in more detail hereinbelow.

Referring to Fig. 7 again, intermediary 134 summarizes outstanding forwarded service requests 132 saved in store 142, produces service request summary 162 which is saved in store 144 and sends it as forwarded service request 164 to entry gateway 136. Alternatively, intermediary 134 can send forwarded service request 164(a) to another intermediary 134(a).

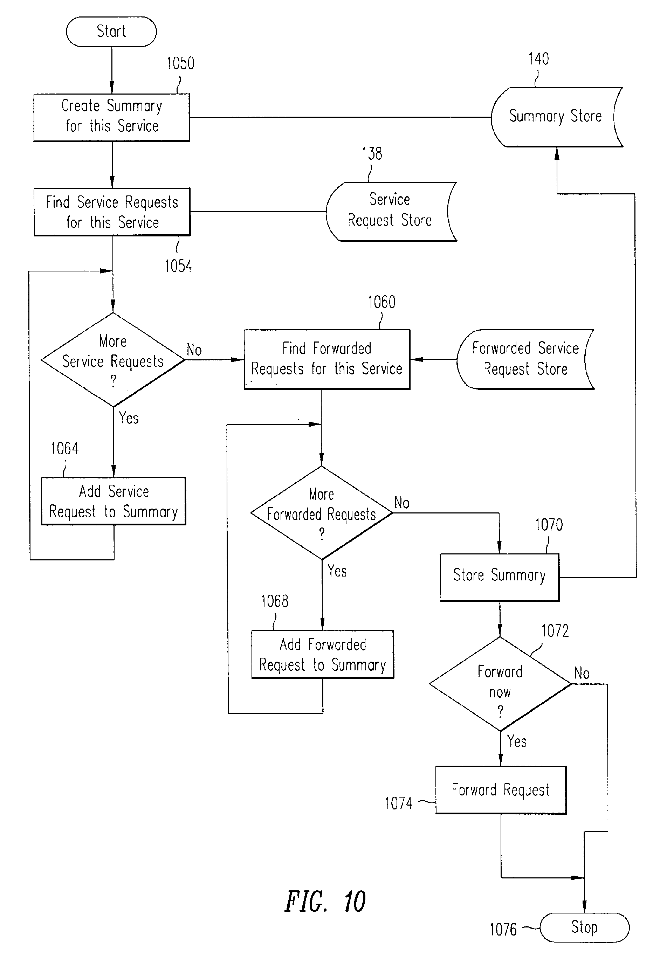

In Fig. 10, a flowchart representing the summarization process of an information router 130, 134, 136 in Fig. 7 for a single service 156 is shown in accordance with an embodiment of the present invention. For example, the process of summarization for exit gateway 130 would begin with exit gateway 130 creating a summary 152 at 1050. If there are any service requests 126, 128 in the service request store 138 they are retrieved at 1054 and merged into the summary 152 at 1064. When there are no service requests to add from the service request store 138, the process continues, determining whether there are any forwarded service requests in the forwarded service request store to be retrieved at 1060 and merged into the summary 152 at 1068. When there are no more forwarded service requests to be retrieved, the summary 152 is then stored in the summary store 140, at 1070. In the present example there are no forwarded service requests for exit gateway 130 to retrieve. Exit gateway 130 determines at 1072 if it should forward the completed summary 152 to next information router 134 immediately. If it should, it then generates and sends a forwarded service request 132 at 1074. If not, the process comes to a stop at 1076.

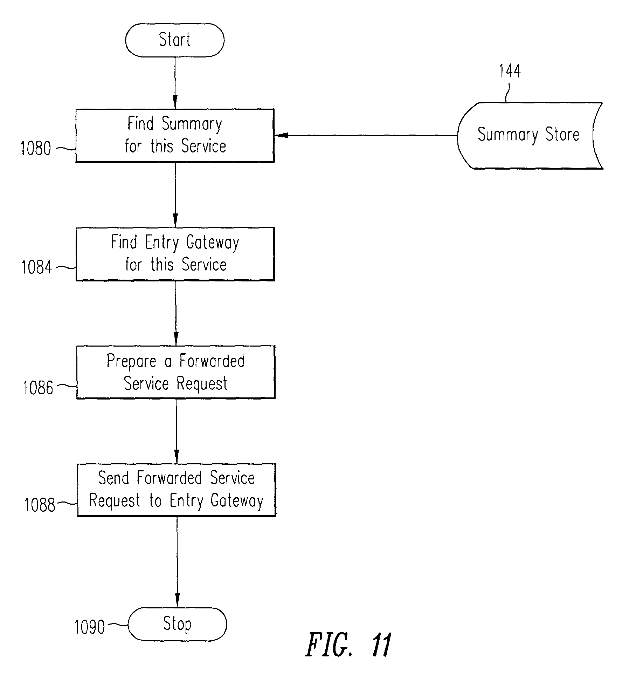

In Fig. 11, a flowchart representing the process by which an exit gateway 130 or an intermediary134 would forward a service request summary152, 162 to an entry gateway 136 is shown, in accordance with an embodiment of the present invention. For example, when intermediary 134 in Fig. 7 forwards summary 162 to entry gateway 136, at 1080, intermediary 134 retrieves the summary 162 from the forwarded service request summary store 144, finds the entry gateway address 166 for the service 156 at 1084, then prepares a forwarded service request 164 at 1086 and sends it to entry gateway 136 at 1088. Entry gateway 136 stores incoming forwarded service request 164 in forwarded service request store 146, only keeping the most recent summary 162 from intermediary 134 for service 156. It is possible for entry gateway 136 to receive a number of forwarded service requests 164 for service 156, from different forwarding information routers 134. The process then comes to a stop at 1090.

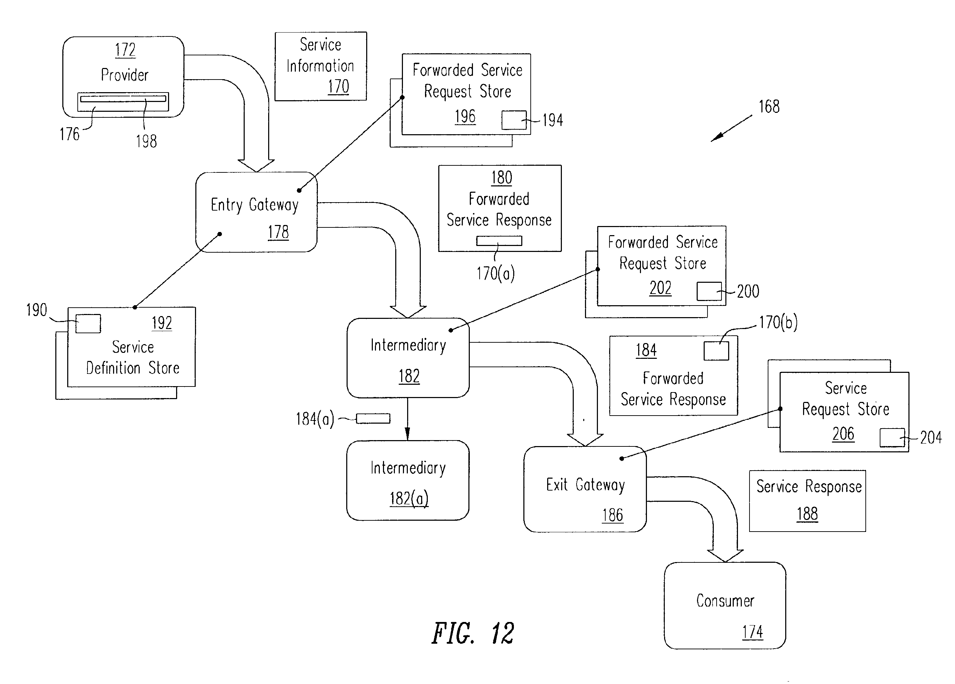

An example of an information flow unit 168 depicting how service information 170 flows between a provider 172 to a consumer 174 is shown in Fig. 12, according to an embodiment of the present invention. The information flow unit 168 is shown to include a service 176 provided by provider 172, which sends service information 170 to an entry gateway 178, which sends a forwarded service response 180 to an intermediary 182. Forwarded service response 184 is sent from intermediary 182 to an exit gateway 186, which sends a service response 188 to consumer 174. Provider 172 supplies service information 170 to entry gateway 178, according to one of the service definitions 190 in service definition store 192 associated with entry gateway 178. Entry gateway 178 uses forwarded service requests 194 previously saved in forwarded service request store 196 to select information to be extracted from service information 170 and determine where to send it. For each forwarded service request 194, entry gateway 178 sends the selected subset of the service information 170 (a) to the forwarding information router 182 as forwarded service response 180. Forwarded service response 180 minimally includes an identifier 198 for the service 176 to which this information belongs, and a subset of the service information 170 which was supplied to entry gateway 178. When intermediary 182 receives forwarded service response 180, it uses the forwarded service requests 200 previously saved in forwarded service request store 202 to select information to be extracted from subset of service information 170 (a) and determine where to send it. Intermediary 182 sends subset of service information 170(b) to exit gateway 186 in forwarded service response 184. Alternatively, intermediary 182 can send forwarded service response 184(a) to another intermediary 182(a). When exit gateway 186 receives forwarded service response 184, it processes it according to the service requests 204 previously saved in service request store 206 and sends the results to the consumer 174 in the form of service response 188. For each outstanding service request 204 for this service 176, exit gateway 186 uses the "Result" specification to select and transform the service information 170 to fulfill the service requests 204. "Result" specification is shown in more detail hereinbelow. The service request 204 may include structure and format instructions, which the exit gateway 186 applies. If no structure and formatting instructions are supplied by service request 204, the service response 188 is similar in structure and format of service information 170 originally supplied to the entry gateway 178 by provider 172.

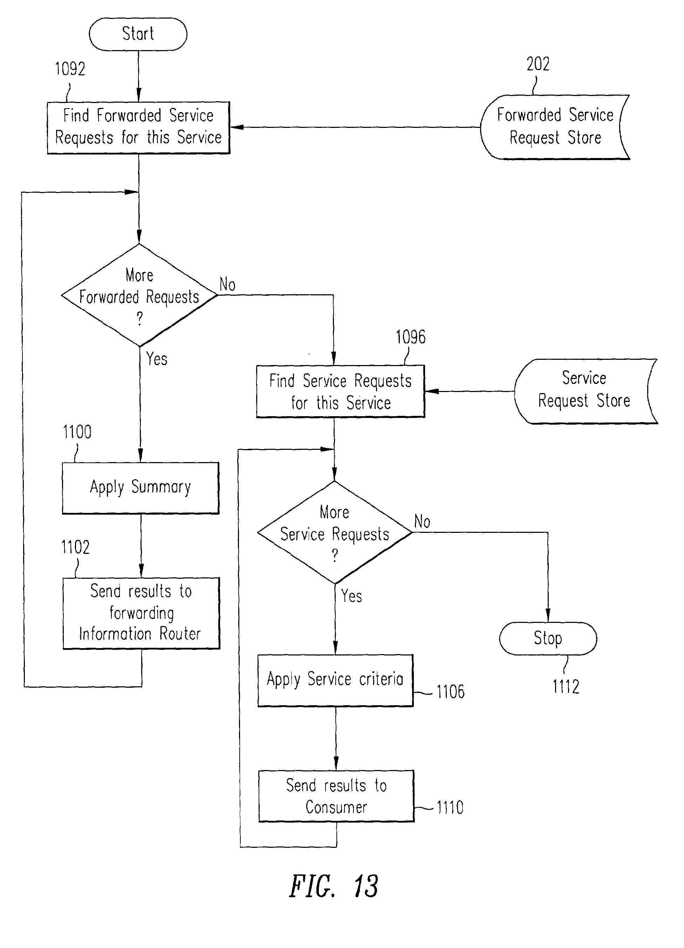

Fig. 13 shows a flowchart on the process by which an information router 178, 182, 186 in Fig. 12 processes incoming service information 170 or forwarded service responses 180, 184. For example, intermediary 182 in Fig. 12 processes an incoming forwarded service response 180 by first retrieving any forwarded service requests 200 for service 176 in forwarded service request store 202 associated with intermediary 182 at 1092. Intermediary 182 uses forwarded service request 200 to prepare a forwarded service response 184 at 1100 and sends it to exit gateway 186 at 1102. When there are no more forwarded service requests 200 to be added, service requests for service 176 are searched for in service request store associated with intermediary 182 at 1096. If there are any service requests for service 176 in the service request store associated with intermediary 182, they are retrieved at 1096. For each service request, intermediary 182 would apply the "Result" specification in service request to filter out requested information to be sent to the consumer at 1110. However, since there are no service requests associated with intermediary 182, the process comes to a stop at 1112.

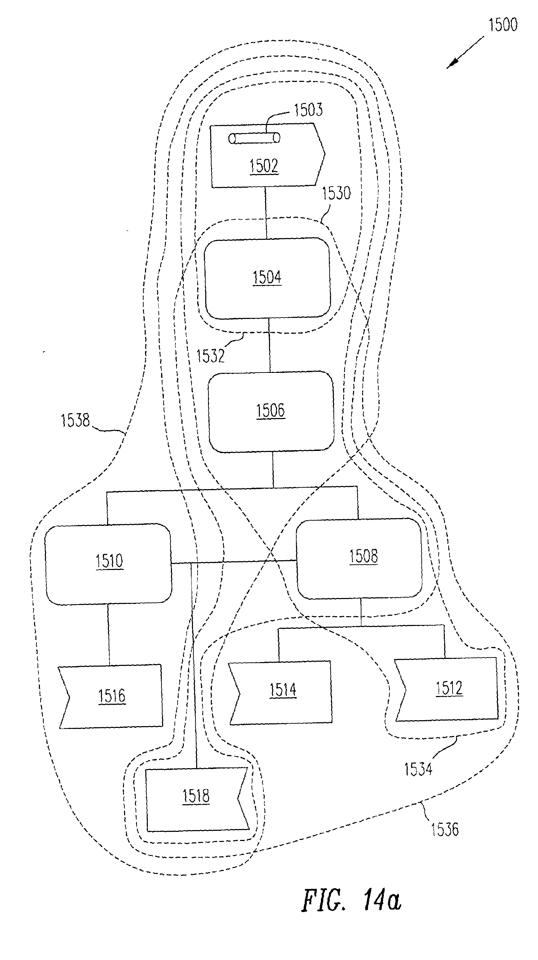

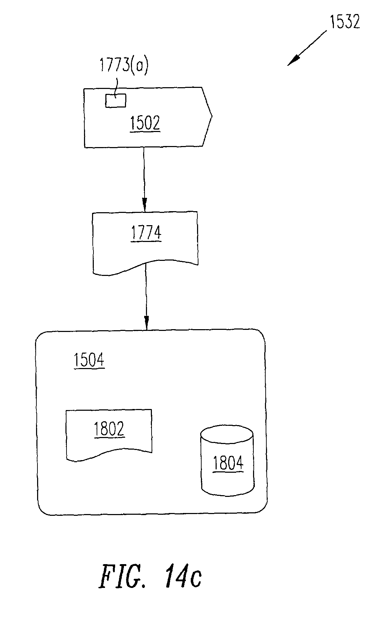

Referring now to Fig. 14(a), a block diagram of an example of a flight status information routing system 1500 is shown in accordance with an embodiment of the present invention to illustrate the summarization process. Included are a provider 1502 providing service 1503, information routers 1504, 1506, 1508 and 1510, and three consumers 1512, 1514, 1516. Information router 1504 is coupled to provider 1502, and therefore is an entry gateway. Information router 1506 is coupled to entry gateway 1504 and to information routers 1508 and 1510, and therefore is an intermediary. Two consumers, 1512 and 1514, are coupled to information router 1508, while consumer 1516 is coupled to information router 1510, and therefore information routers 1508 and 1510 are exit gateways. A subscriber 1518 is coupled to both exit gateways 1508 and 1510, representing consumers 1512, 1514, and 1516.

In the present example, a computer system at Heathrow Airport, which acts as provider 1502, provides a service 1503 identified as "Heathrow" for monitoring the status of incoming flights. Whenever the status of a flight changes, provider 1502 generates an XML document 1773(a), 1773(b), 1773(c) describing the change and transmits it to entry gateway 1504.

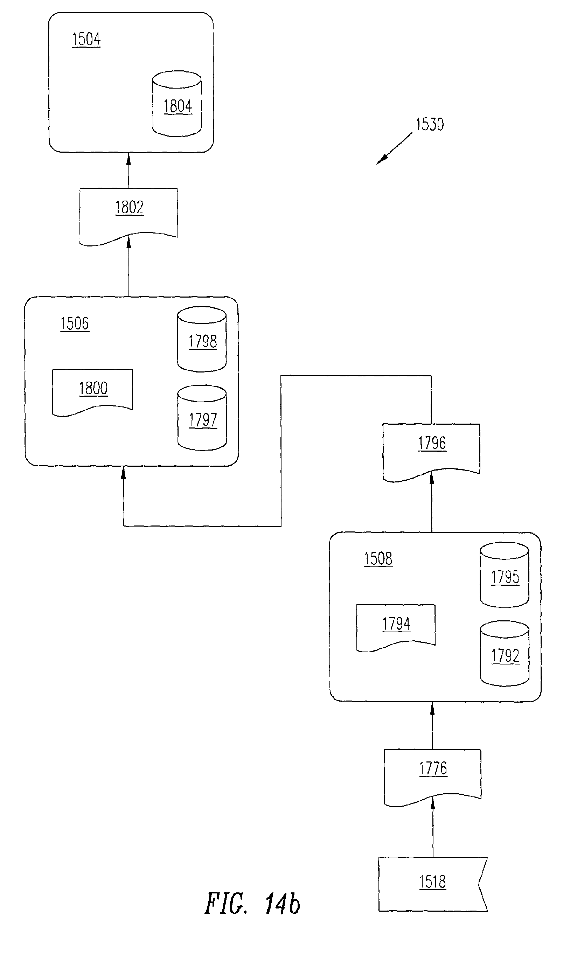

In Fig. 14(b), an information router segment 1530, from information routing system 1500 shown in Fig. 14(a), is shown in accordance with an embodiment of the present invention to include entry gateway 1504 including a forwarded service request store 1804, intermediary 1506 including a forwarded service request store 1797 and a forwarded service request summary store 1798, exit gateway 1508 including a service request store 1792 and a service request summary store 1795, and subscriber 1518. Also shown in Fig. 14(b) are sets of information being transmitted within information routing segment 1530, including forwarded service requests 1802, 1796, a service request 1776, a service request summary 1794, and a forwarded service request summary 1800. An example illustrating the process by which information from an initial service request 1776 is propagated through information routing segment 1530 is discussed here. First, subscriber 1518 prepares service request 1776 and submits it to exit gateway 1508 on behalf of consumer 1512. Service request 1776 comprises of the following information:
Consumer: 1512
Service: Heathrow
Criteria: Operator is BA
Result: Origin, Flight, Status.
Format: HTML
Exit gateway 1508 saves service request 1776 in its service request store 1792. Since there is no existing summary for service "Heathrow" in its service request summary store 1795, exit gateway 1508 generates a new summary 1794 for service "Heathrow" containing information from service request 1776 comprising of the following:
Service: Heathrow
Criteria: Operator is BA
Result: Origin, Flight, Status, Operator.
Summary 1794 is saved in service request summary store 1795 and sent to intermediary 1506 in the form of a forwarded service request 1796 comprising:
Sender: Information router 1508
Service: Heathrow
Criteria: Operator is BA
Result: Origin, Flight, Status, Operator.
Intermediary 1506 stores forwarded service request 1796 in its forwarded service request store 1797. Since there is no existing summary for service "Heathrow" saved in its forwarded service request summary store 1798, intermediary 1506 generates a new summary 1800, which is equivalent to forwarded service request 1796, comprising:
Service: 'Heathrow'
Criteria: Operator is BA
Result: Origin, Flight, Status, Operator.
Intermediary 1506 saves summary 1800 in service request summary store 1798 and sends it to entry gateway 1504 in a new forwarded service request 1802 comprising:
Sender: Information router 1506
Service: Heathrow
Criteria: Operator is BA
Result: Origin, Flight, Status, Operator.
Information router 1504 saves forwarded service request 1802 in its forwarded service request store 1804. Since this is the entry gateway for service 'Heathrow', the service request information goes no further.

In Fig. 14(c), information routing segment 1532 of information routing system 1500 shown in Fig. 14(a) is shown according to an embodiment of the present invention to include provider 1502, and entry gateway 1504 which includes a service request store 1804. Also included in Fig. 14(c) are a forwarded service request 1802, a document 1774, and service information 1773(a). In Fig 14(c), the process by which the information routing segment 1532 handles service information 1773(a) which has not been requested by any of the consumers 1512, 1514, 1518 is described here.

Provider 1502 generates service information 1773(a) and sends it to entry gateway 1504 in the form of a document 1774 comprising:
Time: 07:05
Operator: VS
Flight: VS022
Origin: WASHINGTON
Status: LANDED
Terminal: 3
Entry gateway 1504 retrieves forwarded service request 1802 from its forwarded service request store 1804, and evaluates the "Criteria" specification:
Criteria: Operator is BA
Since the operator specified in document 1774 in entry gateway 1504 is "VS" which does not match the "Criteria" of "Operator is BA" specified in retrieved forwarded service request 1802, and there are presently no other forwarded service requests to be retrieved from forwarded service request store 1804, exit gateway 1504 discards document 1774.

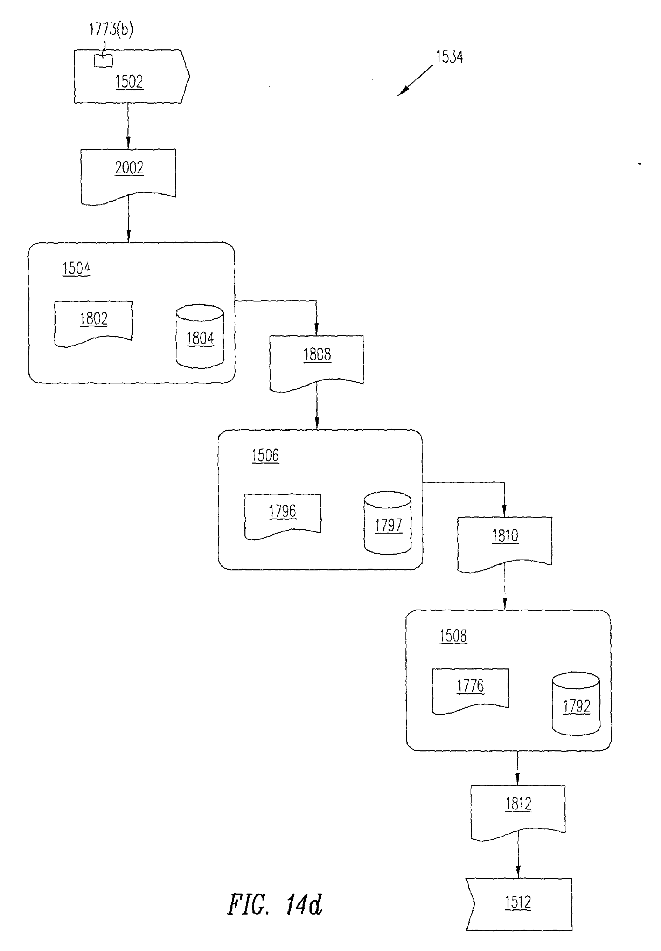

Shown in Fig. 14(d) is an information routing segment 1534 from information routing system 1500 shown in Fig. 14(a), according to an embodiment of the present invention. Information routing segment 1534 is shown to include provider 1502, entry gateway 1504 including a forwarded service request store 1804, intermediary 1506 including a forwarded service request store 1797, exit gateway 1508 including a service request store 1792, and consumer 1512. Also shown to be included in information routing segment 1534 are service information 1773(b), a document 2002, forwarded service requests 1802, 1796, a service request 1776, forwarded service responses 1808, 1810, and service response 1812. An example of the process by which service information 1773(b) propagates through the information routing segment 1534 in response to a single service request 1776 is depicted in Fig. 14(d). Provider 1502 generates service information 1773(b) and sends it to entry gateway 1504 in the form of document 2002 comprising:
Time: 07:05
Operator: BA
Flight: BA022
Origin: DUBLIN
Status: LANDED
Terminal: 1
Entry gateway 1504 retrieves forwarded service request 1802 is from its forwarded service request store 1804, and finds that the selection "Criteria" specified in forwarded service request 1802 to comprise of:
Criteria: Operator is BA
   Since this "Criteria" specification matches the "Operator" specified as "BA" in document 2002, entry gateway 1504 examines the "Result" specification in forwarded service request 1802 which comprises of:
Result: Origin, flight number, status, operator.
Entry gateway 1504 then prepares a new forwarded service response 1808 with contents as follows to include information contained in document 2002 to fulfil each element requested in the "Result" specification of forwarded service request 1802:
Service: Heathrow
Origin: DUBLIN
Flight: BA022
Status: LANDED
Operator: BA
Entry gateway 1504 identifies that the sender in forwarded service request 1802 "Information router 1506"and sends forwarded service response 1808 to intermediary 1506. Since there are presently no more forwarded service requests stored in forwarded service request store 1804 of entry gateway 1504, entry gateway 1504 discards document 2002 and waits to receive more documents from provider 1502. When intermediary 1506 receives forwarded service response 1808, it locates the service identifier in forwarded service response to be as follows:
Service: Heathrow.
Intermediary 1506 searches its forwarded service request store 1797 for forwarded service requests concerning the "Heathrow" service and retrieves forwarded service request 1796 from store 1797 which comprises of:
Sender: Information router 1508
Service: Heathrow
Criteria: Operator is BA
Result: Origin, Flight, Status, Operator.
Intermediary 1506 compares this information with the contents of forwarded service response 1808 and finds that the "Criteria" specification requires that the operator be "BA" in forwarded service request 1796 matches the operator being "BA" specified in forwarded service response 1808. Thus, intermediary 1506 prepares a new forwarded service response 1810 including information from forwarded service response 1808 to fulfil forwarded service request 1796 as follows:
Service: Heathrow
Origin: DUBLIN
Flight: BA022
Status: LANDED
Operator: BA
Intermediary 1506 sends forwarded service response 1810 to exit gateway 1508. When exit gateway 1508 receives forwarded service response 1810, it searches its service request store 1792 for service requests concerning the service of "Heathrow". Exit gateway 1508 finds and retrieves service request 1776 from store 1792 which includes the following information:
Consumer: 1512
Service: Heathrow
Criteria: Operator is BA
Result: Origin, Flight, Status.
Format: HTML
Exit gateway 1508 finds that the "Criteria" specification of the operator being "BA" in service request 1776 matches the operator of "BA" specified in forwarded service response 1810. Thus, exit gateway 1508 prepares a new service response 1812 according to the "Result" specification in service request 1776, formatted as an HTML document as follows:
<html>
<title>Heathrow</title>
<body><p>Origin: DUBLIN<br>Flight: BA022<br>Status:
   LANDED</body>
   </html>
Exit gateway 1508 then sends service response 1812 to consumer 1512. Since there are no more service requests or forwarded service requests associated with exit gateway 1508, exit gateway 1508 discards service response 1812 and waits for more work.

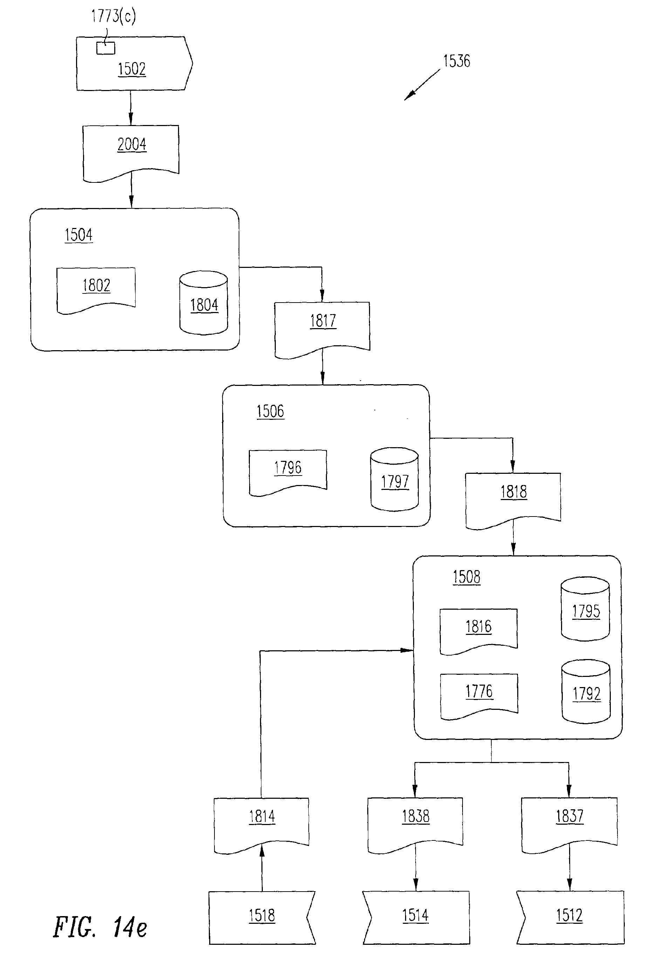

In Fig. 14(e), an information routing segment 1536 of information routing system 1500 shown in Fig. 14(a) is shown according to an embodiment of the present invention to include provider 1502, entry gateway 1504 including a forwarded service request store 1804, intermediary 1506 including a forwarded service request store 1797, exit gateway 1508 including a service request store 1792 and a service request summary store 1795, subscriber 1518, and consumers 1514, 1512. Also included in Fig. 14(e) are service information 1773(c), forwarded service requests 1802, 1796, service requests 1776, 1814, forwarded service responses 1817, 1818, a service request summary 1816, a document 2004, and service responses 1838, 1837. An example of the process by which information routing segment 1536 routes service responses 1838, 1837 for similar service requests 1776, 1814 of different consumers 1514, 1512 at the same exit gateway 1508 is described here. Subscriber 1518 submits a new service request 1814 to exit gateway 1508 on behalf of consumer 1514, comprising:
Consumer: 1514
Service: 'Heathrow'
Criteria: Operator is BA
Result: Origin, Flight, Status.
Format: Text with commas
Exit gateway 1508 saves service request 1814 in its internal service request store 1792, then generates a new summary 1816 for service 'Heathrow'. There are now two service requests 1776 and 1814, stored in service request store 1792. Exit gateway 1508 produces summary 1816 comprising of:
Service: Heathrow
Criteria: Operator is BA
Result: Origin, Flight, Status.
Exit gateway 1508 retrieves service request summary 1794 for the "Heathrow" service, which it previously prepared, from its internal service request summary store 1795. Since the new summary 1816 is identical to the existing summary 1794, there is no need to generate a new forwarded service request. The new summary 1816 is discarded and both the forwarded service request 1796 in forwarded service request store 1797 in intermediary 1506 and the forwarded service request 1802 in forwarded service request store 1804 in entry gateway 1504 remain unchanged.

Next, another BA flight lands and provider 1502 generates service information 1773(c) and sends it to entry gateway 1504 in the form of document 2004
comprising:
Time: 07:15
Operator: BA
Flight: BA345
Origin: PARIS
Status: LANDED
Terminal: 2
As described hereinabove, entry gateway 1504 retrieves forwarded service request 1802 from its forwarded service request store 1804 again, and finds that the selection "Criteria" specified in forwarded service request 1802 is comprised of:
Criteria: Operator is BA
Since this "Criteria" specification matches the "Operator" specified as "BA" in document 2004, entry gateway 1504 examines the "Result" specification in forwarded service request 1802 which comprises of:
Result: Origin, flight number, status, operator.
Entry gateway 1504 then prepares a new forwarded service response 1817 with contents as follows to include information contained in document 2004 to fulfil each element requested in the "Result" specification of forwarded service request 1802:
Service: Heathrow
Origin: PARIS
Flight: BA345
Status: LANDED
Operator: BA
Entry gateway 1504 identifies that the sender in forwarded service request 1802 is "Information Router 1506" and sends forwarded service response 1817 to intermediary 1506, then discards document 2004 and waits for more service information to be sent from provider 1502.

When intermediary 1506 receives forwarded service response 1817, it searches its forwarded service request store 1797 for forwarded service requests and retrieves forwarded service request 1796. Intermediary 1506 finds that the selection "Criteria" specified in forwarded service request 1796 comprises of:
Criteria: Operator is BA.
Since this matches the operator specified as "BA" in document 2004, intermediary 1506 examines the "Result" specification in forwarded service request 1796 which includes:
Result: Origin, Flight, Status, Operator.
Intermediary 1506 then prepares a new forwarded service response 1818 with contents as follows to include information contained in document 2004 to fulfil each element requested in the "Result" specification of forwarded service request 1796:
Service: Heathrow
Origin: PARIS
Flight: BA345
Status: LANDED
Operator: BA
Intermediary 1506 then sends forwarded service response 1818 to exit gateway 1508.

When exit gateway 1508 receives forwarded service response 1818 it searches its service request store 1792 for service requests and retrieves two service requests 1776, 1814 associated with the "Heathrow" service. Exit gateway 1508 handles the service requests 1776, 1814 independently, in arbitrary order or simultaneously. For service request 1776, exit gateway 1508 finds that the selection "Criteria" is specified as the following:
Criteria: Operator is BA.
Since this matches the operator specified as "BA" in document 2004, exit gateway 1508 examines the "Result" specification in forwarded service request 1776 which includes:
Result: Origin, Flight, Status, Operator.
Exit gateway 1508 then generates service response 1837 for service request 1776 with contents as follows to include information contained in document 2004 to fulfil each element requested in the "Result" specification of service request 1776:
<html>
<title>Heathrow</title>
<body><p>Origin: PARIS<br>Flight: BA345<br>Status: LANDED</body>
</html>
Exit gateway 1508 then sends service response 1837 to consumer 1512.

For service request 1814 exit gateway 1508 finds that the selection "Criteria" is specified as the following:
Criteria: Operator is BA.
Since this matches the operator specified as "BA" in document 2004, exit gateway 1508 examines the "Result" specification in service request 1814 which includes:
Result: Origin, Flight, Status.
Exit gateway 1508 then generates service response 1838, in the form of a comma-separated text document, in response to service request 1814 with contents as follows to include information contained in document 2004 to fulfil each element requested in the "Result" specification of service request 1814:
"PARIS","BA345","LANDED".
Exit gateway 1508 then sends service response 1838 to consumer 1514.

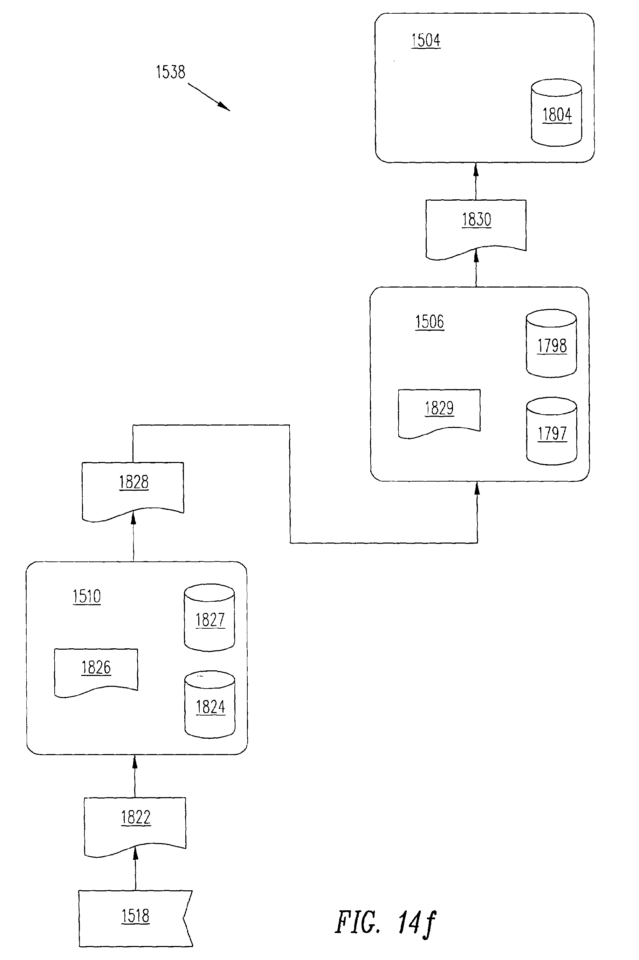

In Fig. 14(f), an information routing segment 1538 of information routing system 1500 shown in Fig. 14(a) is shown according to an embodiment of the present invention. Information routing segment 1538 is shown to include entry gateway 1504 including a forwarded service request store 1804, intermediary 1506 including a forwarded service request summary store 1798 and a forwarded service request store 1797, exit gateway 1510 including a service request summary store 1827 and a service request store 1824, and subscriber 1518. Information routing segment 1538 also includes forwarded service requests 1830, 1828, a forwarded service request summary 1829, a service request summary 1826, and a service request 1822. An example of the process by which the information segment 1538 summarizes service requests 1776, 1822 with different "Criteria" and "Result" specifications submitted to different exit gateways 1508, 1510 is discussed here. First, subscriber 1518 prepares and submits a new service request 1822 to exit gateway 1510 on behalf of consumer 1516 which comprises of the following:
Consumer: 1516
Service: Heathrow
Criteria: Status is LANDED
Result: Origin, Flight, Terminal
This is the first service request 1822 for service "Heathrow" to arrive at exit gateway 1510. Exit gateway 1510 saves service request 1822 in its internal service request store 1824. Exit gateway 1510 then generates a new summary 1826, saves it in its internal service request summary store 1827, and sends it to intermediary 1506 in the form of a new forwarded service request 1828 including the following information:
Sender: Information router 1510
Service: Heathrow
Criteria: Status is LANDED
Result: Origin, Flight, Terminal, Status
When forwarded service request 1828 arrives, intermediary 1506 saves forwarded service request 1828 in its internal forwarded service request store 1797. From its forwarded service request store 1797, intermediary 1506 retrieves a previous forwarded service request 1796 which comprises of:
Sender: Information router 1508
Service: Heathrow
Criteria: Operator is BA
Result: Origin, Flight, Status, Operator.
Intermediary 1506 then generates a new summary 1829 for the "Heathrow" service which combines the "Criteria" and "Result" specifications from forwarded service request 1828 and forwarded service request 1796, which includes the following information:
Criteria: Operator is BA or Status is LANDED
Result: Origin, Flight, Status, Operator, Terminal
Intermediary 1506 saves the new summary 1829, replacing the previous summary 1800 for the "Heathrow" service in its internal service request summary store 1798. Finally, intermediary 1506 sends the forwarded service request summary 1829 to entry gateway 1504 in the form of forwarded service request 1830 comprising:
Sender: Information router 1506
Service: Heathrow
Criteria: Operator is BA or Status is LANDED
Result: Origin, Flight, Status, Operator, Terminal
When forwarded service request 1830 arrives, entry gateway 1504 saves it in its forwarded service request store 1804, replacing the previously stored forwarded service request 1802 since both forwarded service requests share the same "Sender" specified as "Information router 1506" and the same "Service" specified as "Heathrow".

One application for the present invention includes flight information routing systems or other systems where information is requested by an individual or organization, and the requested information is provided by an individual or organization, and the information is transported efficiently through routers which selectively filter information to include information requested.

Although the present invention has been described in terms of specific embodiments it is anticipated that alterations and modifications thereof will no doubt become apparent to those skilled in the art. It is therefore intended that the following claims be interpreted as covering all such alterations and modification as fall within the scope of the invention.

The present invention can be implemented using computer programs operating on processors of the above described apparatus . An aspect of the present invention thus provides a storage medium storing processor implementable instructions for controlling a processor to carry out the method as hereinabove described.

Further, the computer program can be obtained in electronic form for example by downloading the code over a network such as the internet. Thus in accordance with another aspect of the present invention there is provided an electrical signal carrying processor implementable instructions for controlling a processor to carry out the method as hereinbefore described.

## Claims

1. An information routing system for distributing structured information between a provider and one or more consumers, the system including an information router for coupling the provider to the one or more consumers comprising:
a subscriber, a person or an organization coupled to the information router for conveying said one or more consumer's interest in a particular service, said particular service including a particular content as defined by the subscriber;
a. service request means for requesting said particular service dictated by the subscriber to the information router; and
b. service response means responsive to a document received by the information router from the provider, said received document being parsed to include only the particular content,
wherein requests for information by subscribers are sent to an information router which parses a document received from the provider and returns service information from which relevant portions are then sent in the form of service responses to the consumers.

2. An information routing system as recited in claim 1 wherein said information routing system further includes one or more information routers.

3. An information routing system as recited in claim 2 wherein one or more of said one or more information routers is coupled to the provider defining entry gateways, one or more of said one or more information routers is coupled to the one or more consumers defining exit gateways and one or more of said one or more information routers is coupled between the entry gateway and the exit gateway defining intermediaries.

4. An information routing system as recited in claim 3 wherein said information routing system is capable of being an entry gateway, an exit gateway and/or an intermediary.

5. An information routing system as recited in claim 4 wherein an exit gateway maintains a storage location for storage of said service request means and a storage location for storage of service request means summaries, the one or more consumers being coupled to a particular exit gateway, said service request means summaries including the stored service request means associated with the one or more consumers coupled to the particular exit gateway.

6. An information routing system as recited in claim 5 wherein the intermediary is coupled to one or more adjacently coupled intermediaries or to one or more adjacently coupled entry gateways.

7. An information routing system as recited in claim 6 wherein the exit gateway develops a forwarded service request, said forwarded service request including the stored service request means, said forwarded service request being sent to the one or more adjacently coupled intermediaries or to the one or more adjacently coupled entry gateways.

8. An information routing system as recited in claim 7 wherein the intermediary or the entry gateway maintains a storage location for storage of said forwarded service request and a storage location for storage of forwarded service request summaries developed in the intermediary, said forwarded service request summaries including the stored forwarded service request associated with the intermediaries.

9. An information routing system as recited in claim 8 wherein the intermediary develops said forwarded service request including the stored forwarded service request summaries, said forwarded service request being transmitted to the one or more adjacently coupled intermediaries or to the one or more adjacently coupled entry gateways.

10. An information routing system as recited in claim 9 wherein the entry gateway includes a storage location for storage of said forwarded service request received from the one or more adjacently coupled intermediaries, said entry gateway receiving said document from the provider.

11. An information routing system as recited in claim 10 wherein each entry gateway develops a forwarded service response responsive to said document received from the provider, said received document being parsed by the entry gateway to include only the particular content.

12. An information routing system as recited in claim 11 wherein the intermediary or the entry gateway is coupled to one or more exit gateways and said forwarded service response is transmitted to either the one or more exit gateways or the one or more intermediaries.

13. An information routing system as recited in claim 12 wherein said forwarded service response is sent from the intermediary to either the one or more adjacently coupled exit gateways or to the one or more adjacently coupled intermediaries and said forwarded service response is determined by said intermediary by reference to the forwarded service request summary.

14. An information routing system as recited in claim 13 wherein the service response means is a service response and said service response is transmitted to the one or more consumers requesting said particular service.

15. An information routing system as recited in claim 14 wherein said service request means is a service request.

16. An information routing system as recited in claim 15 wherein the information router is coupled to one or more providers and said information router processes information for a particular service provided by the one or more providers concurrently.

17. An information routing system as recited in claim 16 further including structured information having service request templates for instructing said subscribers on requesting said particular content.

18. An information routing system as recited in claim 17 wherein said structured information includes service definitions stored in said entry gateway describing contents of said particular service.

19. An information routing system as recited in claim 18 wherein a publisher is a person or organization who develops said service definitions transported to said entry gateways or provides a subscriber with said service request templates.

20. An information routing system as recited in claim 19 wherein said structured information includes said service definitions, said service request templates, said service request means, said forwarded service request, said service response, said forwarded service response, said document or said particular content.

21. An information routing system comprising:
a. an information router coupled to one or more consumers and one or more subscribers, said information router- receiving service requests from the one or more subscribers for a particular service including a particular content as defined by the one or more subscribers, said information router further receiving a document from a provider, said received document being parsed to include only the particular content for use by the one or more consumers,
wherein requests for information by subscribers are sent to an information router which parses a document received from the provider and returns service information to the information router from which relevant portions are then sent in the form of service responses to consumers.

22. An information routing system as recited in claim 21 wherein said information routing system further includes one or more information routers.

23. An information routing system as recited in claim 22 wherein one or more of said one or more information routers coupled to the provider comprise entry gateways, one or more of said one or more information routers coupled the one or more consumers comprise exit gateways, and one or more of said one or more information routers coupled between the entry gateway and the exit gateway comprise intermediaries.

24. A method for distributing structured information between a provider and one or more consumers comprising:
a. conveying said one or more consumer's interest in a particular service by one or more subscribers to said information router;
b. receiving a service request having contents for requesting a particular service dictated by the one or more subscribers, said particular service including a particular content as defined by the one or more subscribers;
c. receiving a document from the provider;
d. generating a service response from said received document to include only the particular contents.

25. A method of communicating information from an information providing terminal to one or more consumer terminals via a network comprising at least one information router, the method comprising:
operating the information providing terminal to generate information transmitted as a document in which data is structured using a mark-up language;
storing in the information router a template defining a subset of the document data of interest to the consumer terminal;
the information router parsing the document to extract the data of interest to the consumer terminal and construct a further document for the extracted data;
and the information router transmitting the further document to the consumer terminal.

26. An information router for use in the method of claim 25 comprising means for receiving and parsing the document and means for transmitting the further document to the consumer terminal to which it is connected in use.

27. A document in the form of an electrical signal transmitted in accordance with the method of claim 25 from the router to the consumer terminal.

28. A consumer terminal for use in the method of claim 25.

29. A computer program for controlling a processor of an information router to carry out the method of claim 25.

30. A storage medium storing processor implementable instructions for controlling a processor of any one of a router and a consumer terminal to carry out the method of claim 25.

31. An electrical signal carrying processor implementable instructions for controlling a processor of any one of a router and a consumer terminal to carry out the method of claim 25.
